# EUROPÄISCHE PATENTANMELDUNG

(11) **EP 4 667 809 A1**
(43) Veröffentlichungstag der Anmeldung: **24.12.2025**
(21) Anmeldenummer: 24183469.6
(22) Anmeldetag: 20.06.2024
(51) Int. Cl.: F16P 3/14

(54) **ANORDNUNG, VERFAHREN UND SYSTEM ZUR ÜBERWACHUNG EINES SICHERHEITSRELEVANTEN BEREICHS**

(71) Anmelder: Siemens Aktiengesellschaft, 80333 München (DE)
(72) Erfinder: Walter, Maximilian, 90408 Nürnberg (DE); Jaremenko, Christian, 91080 Spardorf (DE); Kahabka, Thomas, 91224 Pommelsbrunn (DE); Röttenbacher, Maren, 91171 Greding (DE)
(74) Vertreter: Siemens Patent Attorneys

(57) **Zusammenfassung**

Die Erfindung betrifft eine Anordnung (5) zur Überwachung eines sicherheitsrelevanten Bereichs (4), insbesondere eines Betriebsbereichs, bevorzugt eines Fertigungs- und Logistikbereichs (1), mit
mindestens einer Sensoreinheit (6), welche ausgebildet ist, zumindest einen Teil eines sicherheitsrelevanten Bereichs (4) zu erfassen und Personen zu detektieren, und mit
einer Steuerungseinrichtung (9), welche mit der mindestens einen Sensoreinheit (6) kommunikativ verbunden oder verbindbar ist und ausgebildet ist, Anweisungen an Vorrichtungen, die sich im sicherheitsrelevanten Bereich (4) oder in der Nähe des sicherheitsrelevanten Bereichs (4) befinden, zu senden.

## Beschreibung

Die vorliegende Erfindung betrifft eine Anordnung zur Überwachung eines sicherheitsrelevanten Bereichs, insbesondere eines Betriebsbereichs, bevorzugt eines Fertigungs- oder eines Logistikbereichs. Außerdem betrifft die Erfindung ein System umfassend eine solche Anordnung. Schließlich betrifft die Erfindung ein Verfahren zur Überwachung eines sicherheitsrelevanten Bereichs, insbesondere eines Betriebsbereichs, bevorzugt eines Fertigungs- oder eines Logistikbereichs.

Die Automatisierung von Fertigungseinrichtungen spielt eine immer größere Rolle, um auch in Hochlohnländern eine wettbewerbsfähige Fertigung in der Industrie zu ermöglichen. Einen zunehmenden Einsatz finden dabei beispielsweise Industrieroboter, die für Fertigungsarbeiten, beispielsweise Schweißarbeiten, oder auch zu Handhabungszwecken, beispielsweise zum Bestücken von Werkzeugmaschinen, eingesetzt werden können. Häufig ist es aus Sicherheitsgründen erforderlich, dass solche Fertigungsanlagen oder Fertigungseinrichtungen hinter Zäunen betrieben werden. Solange der Betrieb läuft, ist der Zaun geschlossen, um zu vermeiden, dass Menschen in einen sicherheitsrelevanten Bereich versehentlich eindringen können und durch derartige Einreichungen verletzt werden können. Üblicherweise kann eine solche Umzäunung nur an definierten Stellen durchschritten werden, beispielsweise durch eine Schutztür oder eine Öffnung. Diese sind in der Regel mit Schutzreinrichtungen wie einem Lichtvorhang oder einem Laserscanner ausgestattet. Sobald eine Person den sicherheitsrelevanten Bereich betritt, werden automatisch die Gefahrenquellen abgeschaltet.

Wenn eine Person beispielsweise zur Beseitigung einer Störung sich in dem sicherheitsrelevanten Bereich aufgehalten hat und diesen anschließend verlässt, ist häufig eine Freigabe außerhalb des sicherheitsrelevanten Bereichs erforderlich, um die Einrichtungen wieder einzuschalten und in Betrieb zu nehmen. Dabei muss derjenige, welcher die Freigabe in der Regel manuell erteilt, prüfen, ob sich noch Personen im sicherheitsrelevanten Bereich befinden. Weitere ergänzende Maßnahmen sind möglich. Beispielsweise kann eine Person, die den sicherheitsrelevanten Bereich betritt, ein Schild an einen solchen Freigabeschalter hängen, um zu signalisieren, dass sich jemand im sicherheitsrelevanten Bereich befindet. Möglich ist auch, dass diese ein Schloss an dem Schalter anbringt, um eine Freigabe zu verhindern.

Eine derartige Vorgehensweise hat sich grundsätzlich bewährt. Jedoch reichen diese organisatorischen Maßnahmen nicht in allen Fällen aus, beispielsweise wenn mehrere Personen einen sicherheitsrelevanten Bereich gleichzeitig betreten oder wenn dieser Bereich von ungeschultem Personal, beispielsweise Reinigungskräften, Aushilfen oder neu eingestellten Personen, betreten wird. Außerdem besteht auch immer ein Risiko einer bewussten Fehlanwendung, d.h. einer absichtlichen Freigabe, obwohl sich eine Person noch im sicherheitsrelevanten Bereich befindet. Ein Grund für eine solche Fehlanwendung kann beispielsweise darin bestehen, dass bei einer Maschine oder Fertigungseinrichtung Fehler gefunden werden müssen, oder sie nachjustiert werden muss, was nur im laufenden Betrieb stattfinden kann. Vor diesem Hintergrund kommt es bei Fertigungseinrichtungen mit einer solchen manuellen Bewegungsfreigabe immer wieder zu Unfällen, die erhebliche gesundheitliche Konsequenzen hervorrufen können.

Daneben besteht eine Möglichkeit, den sicherheitsrelevanten Bereich möglichst umfassend mit insbesondere berührungslos wirkenden Schutzeinrichtungen auszustatten. Dabei kann es sich beispielsweise um Sicherheitstrittmatten, Lichtvorhänge, Sicherheits-Laserscanner oder ein Sicherheitsradar handeln. Auch eine derartige Vorgehensweise kann jedoch mit Problemen konfrontiert sein. Bei größeren sicherheitsrelevanten Bereichen ist eine entsprechend große Zahl an Sensoren für eine lückenlose Überwachung erforderlich. Ob alle Bereiche wirklich lückenlos erfasst werden, ist mitunter schwierig herauszufinden. Je nach angewendeten Sensoren besteht das Risiko, dass durch Spiegelungen und Reflexionen auch Bereiche außerhalb des sicherheitsrelevanten Bereichs überwacht werden. Dadurch kann es zu unerwünschten Fehlabschaltungen kommen, was die Produktivität der Fertigungseinrichtungen reduziert. Mitunter ist eine Unterscheidung zwischen Personen und unbelebten Objekten, z.B. Werkstücken, sich bewegenden Bändern, Maschinenteilen, fahrerlosen Transportsystemen, nicht möglich. Häufig ist dann trotz der umfassenden Sicherheitseinrichtungen immer noch eine manuelle Freigabe durch einen Bediener erforderlich.

Mit zunehmendem Automatisierungsgrad besteht auch die Notwendigkeit, dass alternativ oder ergänzend zum manuellen Materialtransport z.B. mit Staplern oder Hubwagen nach Möglichkeit durch autonome Flurförderfahrzeuge, die auch als Autonomous Guided Vehicles (AGV) bezeichnet werden, eingesetzt werden. Eine wesentliche Anwendung ist dabei das schnelle Be- und Entladen von Lastwagen bzw. LKW-Anhängern. Außerdem ist es gerade in größeren Fabriken häufig erforderlich, Güter über weitere Strecken zu transportieren. Eine Schwierigkeit besteht darin, dass bei solchen Anwendungen das Risiko von Unfällen relativ hoch ist. Insbesondere tritt dies dann auf, wenn sich Personen und selbstfahrende Fahrzeuge in gleichen Bereichen bewegen.

Dem kann begegnet werden dadurch, dass der gesamte Bereich, in dem selbstfahrende Fahrzeuge unterwegs sind, für Personen gesperrt wird. Auf diese Weise kann ein Verletzungsrisiko von vorne herein ausgeschlossen werden. Es muss lediglich sichergestellt werden, dass die selbstfahrenden Fahrzeuge nicht untereinander kollidieren. Allerdings besteht hier keine Gefahr für Personen, so dass die Richtlinien der funktionalen Sicherheit hier nicht umgesetzt werden müssen. In der Regel können Kollisionen bereits in den meisten Fällen dadurch ausgeschlossen werden, dass sich alle selbstfahrenden Fahrzeuge an die definierten Regeln halten.

Hierdurch entstehen jedoch ein hoher Platzbedarf und die Notwendigkeit, dass alle selbstfahrenden Fahrzeuge angehalten werden müssen, sobald eine Person den sicherheitsrelevanten Bereich betritt. Dies kann beispielsweise beim Beseitigen von Störungen der Fall sein, was relativ häufig auftreten kann.

Eine Alternative besteht darin, die selbstfahrenden Fahrzeuge mit berührungslos wirkenden Schutzeinrichtungen auszustatten. Hierbei kann es sich beispielsweise um Laserscanner handeln. Diese Schutzeinrichtungen prüfen permanent, ob sich Objekte innerhalb eines Schutzfeldes um das selbstfahrende Fahrzeug herum befinden. Sobald ein Objekt erkannt wird, wird das selbstfahrende Fahrzeug abgebremst und bei Bedarf so lange angehalten, bis sich das Objekt wieder entfernt hat. Beim Be- und Entladen von Lastwagen in einer sehr beengten Umgebung müssen die Schutzfelder entsprechend klein gewählt werden. Ansonsten käme es zu sehr zahlreichen Abschaltungen. Dies bedeutet allerdings auch, dass eine Person erst relativ spät erkannt werden kann. Vor diesem Hintergrund fahren selbstfahrende Fahrzeuge, die mit solchen Schutzeinrichtungen versehen sind, bei entsprechend kleinen Schutzbereichen nur sehr langsam. Dadurch verlängert sich die Zeit für das Be- und Entladen von Lastwagen und ist nicht vergleichbar mit einem manuellen Entladen mittels eines Gabelstaplers. Wird ein großes Schutzfeld gewählt, was auch eine hohe Geschwindigkeit ermöglichen würde, kann es zu Problemen bei Fehlauslösungen in Kurven und an Steigungen kommen.

Vor diesem Hintergrund besteht die Aufgabe der vorliegenden Erfindung darin, eine alternative Anordnung zur Überwachung eines sicherheitsrelevanten Bereichs zu schaffen, welche insbesondere die zuvor genannten Nachteile vermeidet und insbesondere einen sicheren Betrieb ermöglicht.

Diese Aufgabe ist bei einer Anordnung zur Überwachung eines sicherheitsrelevanten Bereichs, insbesondere eines Betriebsbereichs zur Fertigung und/oder zur Logistik, gelöst mit mindestens einer Sensoreinheit, welche ausgebildet ist, zumindest einen Teil eines sicherheitsrelevanten Bereichs zu erfassen und Personen zu detektieren, und mit einer Steuerungseinrichtung, welche mit der mindestens einen Sensoreinheit kommunikativ verbunden oder verbindbar ist und ausgebildet ist, Anweisungen an Vorrichtungen, die sich im sicherheitsrelevanten Bereich oder in der Nähe des sicherheitsrelevanten Bereichs befinden, zu senden.

Der Erfindung liegt die grundsätzliche Überlegung zugrunde, einen sicherheitsrelevanten Bereich bzw. einen Gefahrenbereich mit Hilfe einer bestimmten Anordnung zu überwachen und darin Personen automatisiert zu detektieren. Durch die Steuereinrichtung können an entsprechende Vorrichtungen, beispielsweise Maschinen, Roboter, aber auch selbstfahrende Fahrzeuge wie Flurförderfahrzeuge (AGV) entsprechende Anweisungen übermittelt werden. Solange sich eine Person im sicherheitsrelevanten Bereich befindet, kann damit ein Starten der Vorrichtungen, beispielsweise Fertigungseinrichtungen, sicher verhindert werden. Eine irrtümliche Freigabe durch eine Person ist damit ausgeschlossen.

Bei den Vorrichtungen kann es sich beispielsweise um Fertigungseinrichtungen und/oder Roboter und/oder um selbstfahrende Fahrzeuge handeln. Die Vorrichtungen sind bevorzugt nicht Bestandteil der erfindungsgemäßen Anordnung.

Die der Erfindung zugrundeliegende Aufgabe ist ferner gelöst durch ein System umfassend eine Anordnung zur Überwachung eines sicherheitsrelevanten Bereichs wie zuvor beschreiben und mindestens eine Vorrichtung, welche ausgebildet ist, Anweisungen von der Steuerungseinrichtung zu empfangen. Ferner ist die der Erfindung zugrundeliegende Aufgabe gelöst durch ein Verfahren zur Überwachung eines sicherheitsrelevanten Bereichs, insbesondere eines Betriebsbereichs, bevorzugt eines Fertigungs- oder eines Logistikbereichs, wobei mindestens eine Sensoreinheit zumindest einen Teil des sicherheitsrelevanten Bereichs erfasst und Personen in diesem Bereich detektiert, wobei mindestens eine Sensoreinheit mit einer Steuerungseinrichtung kommuniziert und die Steuerungseinrichtung in Abhängigkeit von detektieren Personen Anweisungen an Vorrichtungen, die sich im sicherheitsrelevanten Bereich oder in der Nähe des sicherheitsrelevanten Bereichs befinden, sendet.

Die mindestens eine Sensoreinheit kann ausgebildet sein, den gesamten sicherheitsrelevanten Bereich zu überwachen. Mit anderen Worten kann eine oder mehrere Sensoreinheiten derart ausgestaltet sein, dass sie den gesamten zu überwachenden sicherheitsrelevanten Bereich erfasst und damit auch in dem gesamten sicherheitsrelevanten Bereich in der Lage ist, Personen zu detektieren.

Gemäß einer bevorzugten Ausgestaltung kann mindestens eine, insbesondere jede Sensoreinheit einen bildgebenden Sensor, insbesondere eine Kamera zur Aufnahme von digitalen Bilddateien oder einen Laser-Sensorsystem und eine Time-of-Flight (TOF)-Kamera umfassen. Mit anderen Worten kann es sich bei einer Sensoreinheit um einen kamerabasierten Personendetektor handeln. Dieser kann beispielsweise ausgestaltet sein wie in der WO 2024/012746 A1 im Detail beschrieben. Insbesondere kann dabei ein Überwachungssystem vorgesehen sein, welches es ermöglicht, das Auftreten von Fehlern in solchen kamerabasierten Personendetektoren bzw. Sensoreinheiten sicher zu erkennen. Auch dies ist im Detail in der WO 2024/012746 A1, deren Inhalt vollständig in die vorliegende Anmeldung einbezogen wird, beschrieben. Der bildgebende Sensor kann dabei einen Überwachungsbereich definieren, über welchen die Sensoreinheit Personen detektieren kann. Dieser Überwachungsbereich kann zumindest im Wesentlichen kegelförmig ausgebildet sein. Die Überwachungsbereiche sämtlicher bildgebender Sensoren bilden bevorzugt einen gesamten Überwachungsbereich, in welchem Person detektiert werden können. Bevorzugt umfasst ein solcher gesamter Überwachungsbereich den gesamten sicherheitsrelevanten Bereich. Dadurch kann das Risiko ausgeschlossen werden, dass sich Personen in einem Teil des sicherheitsrelevanten Bereichs aufhalten können, ohne von den Sensoreinheiten detektiert zu werden.

In weiterer Ausgestaltung kann jede Sensoreinheit Auswertemittel enthalten und/oder jeder Sensoreinheit können Auswertemittel zugeordnet sein. Diese können ausgebildet sein, Daten des bildgebenden Sensors insbesondere in Echtzeit auszuwerten, um Personen im sicherheitsrelevanten Bereich zu detektieren.

Zur Auswertung können die Auswertemittel auf künstliche neuronale Netze zurückgreifen, wobei die künstlichen neuronalen Netze bevorzugt trainiert sind. Solche neuronalen Netze können dazu dienen, basierend auf einer umfangreichen Erfahrung zu erkennen, ob sich Personen im sicherheitsrelevanten Bereich befinden.

In weiterer Ausgestaltung kann mindestens eine, insbesondere jede Sensoreinheit ausgebildet sein, Personen im sicherheitsrelevanten Bereich zu lokalisieren. Diese Ausgestaltung basiert auf der Überlegung, dass es in bestimmten Konstellationen nicht ausreicht, lediglich zu erkennen, ob eine Person im sicherheitsrelevanten Bereich ist, sondern auch die Position dieser Person im sicherheitsrelevanten Bereich zu bestimmen. Dementsprechend kann das erfindungsgemäße Verfahren dadurch gekennzeichnet, sein, dass Personen im sicherheitsrelevanten Bereich lokalisiert werden. Diese Lokalisierung kann beispielsweise mithilfe einer Positionsangabe in einem insbesondere kartesischen Koordinatensystem erfolgen. Mit anderen Worten kann die Sensoreinheit entsprechende Positionsdaten bereitstellen und/oder an die Steuerungseinrichtung übermitteln. Eine solche Lokalisierung bietet sich insbesondere dann an, wenn der sicherheitsrelevante Bereich relativ groß ist und nicht die Abschaltung sämtlicher Vorrichtungen im gesamten sicherheitsrelevanten Bereich erforderlich ist, sondern lediglich die Abschaltung in der Nähe einer Person.

In einer konkreten Ausgestaltung kann die Anordnung genau zwei einander gegenüberliegende Sensoreinheiten aufweisen. Eine solche Ausgestaltung bietet sich an, wenn ein relativ überschaubarer sicherheitsrelevanter Bereich überwacht werden muss. Bevorzugt kann der sicherheitsrelevante Bereich eine rechteckige Grundfläche aufweisen.

Die mindestens eine Sensoreinheit kann von einem Boden des sicherheitsrelevanten Bereichs beabstandet angeordnet sein oder werden.

Gemäß einer bevorzugten Ausgestaltung sind die mindestens eine Sensoreinheit und die Steuerungseinrichtung in funktional sicherer Technik ausgebildet.

Bevorzugt ist die mindestens eine Sensoreinheit derart eingestellt, dass sie die Personen, die außerhalb eines sicherheitsrelevanten Bereichs lokalisiert werden, ignoriert. Mit anderen Worten kann die Sensoreinheit Informationen über den sicherheitsrelevanten Bereich besitzen. Das bedeutet, dass die Sensoreinheit beim Lokalisieren einer Person auch prüft, ob sich die Person wirklich im sicherheitsrelevanten Bereich oder schon außerhalb des sicherheitsrelevanten Bereichs befindet. Solange das Ergebnis darin besteht, dass sich die Person außerhalb des sicherheitsrelevanten Bereichs befindet, ist eine Weitergabe von Anweisungen an Vorrichtungen im sicherheitsrelevanten Bereich nicht erforderlich.

In weiterer Ausgestaltung kann die Anordnung eine Mensch-Maschine-Schnittstelle aufweisen, mittels derer die sicherheitsrelevanten Bereiche einprogrammiert, bzw. eingegeben werden können. Somit kann vorgesehen sein, dass ein Bediener bzw. ein Betreiber eines sicherheitsrelevanten Bereichs diesen durch eine geeignete Schnittstelle definieren kann. Bei der Schnittstelle kann es sich beispielsweise um einen Rechner mit einem Monitor und einer Tastatur handeln. Denkbar sind auch Ausführungsformen, bei denen eine Programmierung bzw. Eingabe über ein mobiles Gerät, insbesondere ein Smartphone oder ein Tablet, beispielsweise über eine geeignete App, erfolgt.

In konkreter Ausgestaltung können die mindestens eine Sensoreinheit und die Steuerungseinrichtung drahtlos oder kabelgebunden miteinander verbunden sein. Die Steuerungseinrichtung kann eine zentrale Rechnereinheit beinhalten, welche mit sämtlichen Sensoreinheiten verbunden ist. Denkbar ist auch, gerade bei größeren zu überwachenden Bereichen, mehrere verteilt angeordnete Rechnereinheiten vorzusehen, die miteinander verbunden sind.

Bevorzugt ist die Steuerungseinrichtung ausgebildet, kabellos Anweisungen an mindestens eine Vorrichtung zu senden. Die mindestens eine Vorrichtung kann Empfangsmittel enthalten, um Anweisungen der Steuerungseinrichtung zu empfangen. Hierbei kann es sich beispielsweise um Empfangsmittel zum kabellosen Empfangen handeln und/oder um kabelgebundene Empfangsmittel, beispielsweise entsprechende Schnittstellen etc...

Das erfindungsgemäße System kann, wenn mindestens eine Vorrichtung ein selbstfahrendes Fahrzeug, insbesondere ein autonomes Flurförderfahrzeug (AGV) ist, dadurch gekennzeichnet sein, dass mindestens ein, insbesondere jedes selbstfahrende Fahrzeug eine Schutzeinrichtung aufweist, welche ausgebildet ist, Objekte innerhalb eines, insbesondere einstellbaren Schutzbereichs um das selbstfahrende Fahrzeug herum zu erkennen. Dieser Ausgestaltung liegt die Überlegung zugrunde, dass das jeweilige selbstfahrende Fahrzeug eigenständig seine Umgebung überwacht und, insbesondere abhängig von der Geschwindigkeit, bei einem Auftreten eines Hindernisses, beispielsweise einer Person, in seiner Umgebung halten kann. Dementsprechend kann das erfindungsgemäße Verfahren dadurch gekennzeichnet sein, dass das selbstfahrende Fahrzeug mittels einer Schutzeinrichtung Objekte innerhalb eines insbesondere einstellbaren Schutzbereichs um das selbstfahrende Fahrzeug erkennt und insbesondere beim Erkennen eines Objekts automatisch anhält.

In konkreter Ausgestaltung kann die Schutzreinrichtung als Laserscanner ausgebildet sein und/oder einen solchen Laserscanner umfassen.

Das selbstfahrende Fahrzeug kann derart ausgestaltet sein, dass die Größe des Schutzbereichs abhängig von der Geschwindigkeit des selbstfahrenden Fahrzeugs eingestellt wird. Bei einer höheren Geschwindigkeit kann vorgesehen sein, dass der Schutzbereich vergrößert wird, da der Bremsweg sich bei einer höheren Geschwindigkeit entsprechend vergrößert. In engen Räumen, beispielsweise beim Entladen von Lastkraftwagen, kann der Schutzbereich eng gewählt werden, um ein zu häufiges Anhalten zu vermeiden. Dementsprechend ist dann die Geschwindigkeit üblicherweise auch gering.

In weiterer Ausgestaltung kann die Steuerungseinrichtung derart ausgestaltet sein, dass sie Anweisungen an mindestens ein selbstfahrendes Fahrzeug sendet, so dass die Schutzeinrichtung des mindestens einen selbstfahrenden Fahrzeugs deaktiviert wird, wenn keine Person im sicherheitsrelevanten Bereich detektiert wird, und/oder dass die Schutzeinrichtung des mindestens einen selbstfahrenden Fahrzeugs aktiviert wird, wenn eine Person im sicherheitsrelevanten Bereich detektiert wird. Dementsprechend kann das erfindungsgemäße Verfahren dadurch gekennzeichnet sein, dass die Schutzeinrichtung des mindestens einen selbstfahrenden Fahrzeugs deaktiviert wird, wenn keine Person im sicherheitsrelevanten Bereich detektiert wird, und/oder dass die Schutzeinrichtung des mindestens einen selbstfahrenden Fahrzeugs aktiviert wird, wenn eine Person im sicherheitsrelevanten Bereich detektiert wird. Mit anderen Worten kann das System so ausgestaltet sein, bzw. so betrieben werden, dass die Schutzeinrichtungen der selbstfahrenden Fahrzeuge nur dann benutzt werden, sobald eine Person sich im sicherheitsrelevanten Bereich aufhält. Solange keine Person sich im sicherheitsrelevanten Bereich befindet, kann auf die Schutzeinrichtungen verzichtet werden, da Personenschäden ausgeschlossen sind. In diesem Fall können die selbstfahrenden Fahrzeuge sich frei bewegen, was zu höheren Geschwindigkeiten und weniger Haltevorgängen führt. Dadurch kann beispielsweise das Entladen eines Lastkraftwagens deutlich beschleunigt werden.

In weiterer Ausgestaltung kann vorgesehen sein, dass die Schutzeinrichtung eines selbstfahrenden Fahrzeugs nur dann aktiviert wird, wenn sich Personen unterhalb eines vorgegebenen Mindestabstands von dem jeweiligen selbstfahrenden Fahrzeug entfernt befinden. Bei einem derartigen Betriebsmodus, welcher sich gerade bei größeren sicherheitsrelevanten Bereichen anbietet, wird die Person im sicherheitsrelevanten Bereich nicht nur detektiert, sondern lokalisiert. Aufgrund der genauen Positionsangabe der Person genügt es dabei, nur die Schutzeinrichtungen bei den selbstfahrenden Fahrzeugen zu aktivieren, die sich in der Nähe der Person, d.h. innerhalb eines vorgegebenen und/oder einstallbaren Abstands, befinden. Hierzu können beispielsweise Positionsdaten der Person an die selbstfahrenden Fahrzeuge übermittelt werden, so dass die selbstfahrenden Fahrzeuge selbst erkennen können, ob sich eine Person in ihrer Nähe befindet.

Möglich ist auch, dass das System ausgebildet ist, die selbstfahrenden Fahrzeuge zu lokalisieren. Dementsprechend kann die mindestens eine Sensoreinheit die selbstfahrenden Fahrzeuge lokalisieren. Die Steuerungseinrichtung hat in diesem Fall nicht nur Informationen, ob sich Personen im sicherheitsrelevanten Bereich befinden, gegebenenfalls wo sich Personen im sicherheitsrelevanten Bereich befinden, sie kann auch ferner über die Positionsdaten praktisch sämtlicher selbstfahrender Fahrzeuge im sicherheitsrelevanten Bereich verfügen. In weiterer Ausgestaltung können die Abstände der selbstfahrenden Fahrzeuge untereinander bestimmt werden. In Abhängigkeit von den ermittelten Abständen können Anweisungen an die selbstfahrenden Fahrzeuge übermittelt werden. Das bedeutet, dass die Steuerungseinrichtung nicht nur detektieren kann, ob und gegebenenfalls wo sich Personen im sicherheitsrelevanten Bereich befinden. Vielmehr können auch die selbstfahrenden Fahrzeuge präzise lokalisiert werden und die Abstände untereinander ermittelt werden, so dass die Steuerungseinrichtung mittels entsprechender Anweisungen direkt die selbstfahrenden Fahrzeuge steuern kann. In diesem Fall entfallen sämtliche Erfordernisse an Sicherheitseinrichtungen an den selbstfahrenden Fahrzeugen selbst, da die Steuerungseinrichtung der Anordnung zur Überwachung eines sicherheitsrelevanten Bereichs diese Aufgaben vollständig übernimmt. Bei einer derartigen Ausgestaltung sind somit keine Schutzeinrichtungen an den selbstfahrenden Fahrzeugen mehr erforderlich, solange sich die selbstfahrenden Fahrzeuge in einem (überwachten) sicherheitsrelevanten Bereich befinden. Auf diese Weise können Logistikvorgänge deutlich beschleunigt werden.

In weiterer Ausgestaltung kann das System bzw. die Anordnung, konkret die mindestens eine Sensoreinheit und/oder die Steuerungseinrichtung, die Abstände zwischen den selbstfahrenden Fahrzeugen und Hindernissen, die Abstände zwischen den selbstfahrenden Fahrzeugen und detektierten und lokalisierten Personen und die Abstände der selbstfahrenden Fahrzeuge untereinander permanent ermitteln. Ferner können auch die Geschwindigkeiten, insbesondere eine Richtung und ein Betrag der Geschwindigkeiten, ermittelt werden. Ausgehend von den ermittelten Abständen und ggf. der Geschwindigkeiten kann die Steuerungseinrichtungen Anweisungen an die selbstfahrenden Fahrzeuge übermitteln, welche insbesondere Vorgaben zur Geschwindigkeit umfassen.

Mindestens ein selbstfahrendes Fahrzeug, insbesondere jedes selbstfahrende Fahrzeug, kann einen akustischen und/oder optischen Signalgeber aufweisen, um eine Person vor einem sich nähernden Fahrzeug zu warnen. Dementsprechend kann das erfindungsgemäße Verfahren dadurch gekennzeichnet sein, dass die selbstfahrenden Fahrzeuge mit einem optischen und/oder akustischen Warnsignal Personen, denen sich das jeweilige selbstfahrende Fahrzeug annähert, warnen. Wenn ein bestimmter Abstand unterschritten wird, kann das entsprechende Signal ausgelöst werden. Dieser Abstand kann von der Geschwindigkeit des jeweiligen selbstfahrenden Fahrzeugs abhängen. Diese optischen und/oder akustischen Signale können vom selbstfahrenden Fahrzeug selbst initiiert werden, insbesondere wenn diese eine eigene Schutzeinrichtung aufweist. Werden die selbstfahrenden Fahrzeuge direkt von der Steuerungseinrichtung mittels entsprechender Anweisungen gesteuert, so kann die Steuerungseinrichtung, welche die Position sowohl von Personen im sicherheitsrelevanten Bereich, als auch von den selbstfahrenden Fahrzeugen kennt, ein entsprechendes Warnsignal initiieren.

Für die weitere Ausgestaltung der Erfindung wird auf die Unteransprüche und die nachfolgende Beschreibung von Ausführungsbeispielen unter Bezugnahme auf die Zeichnung verwiesen. In der Zeichnung zeigen:
- Figur 1: einen Fertigungsbereich mit einer erfindungsgemäßen Anordnung zur Überwachung eines sicherheitsrelevanten Bereichs in einer schematischen Draufsicht;
- Figur 2: einen Logistikbereich mit einem erfindungsgemäßen System beim Entladen eines LKW in einer schematischen Ansicht;
- Figur 3: einen länglichen Gang mit einem erfindungsgemäßen System in einer schematischen Ansicht;
- Figur 4: den länglichen Gang aus Figur 3 in einer anderen Situation in einer schematischen Ansicht;
- Figur 5: eine Wegkreuzung mit einem erfindungsgemäßen System in einer schematischen Ansicht; und
- Figur 6: die Wegkreuzung aus Figur 5 in einer anderen Situation in einer schematischen Ansicht.

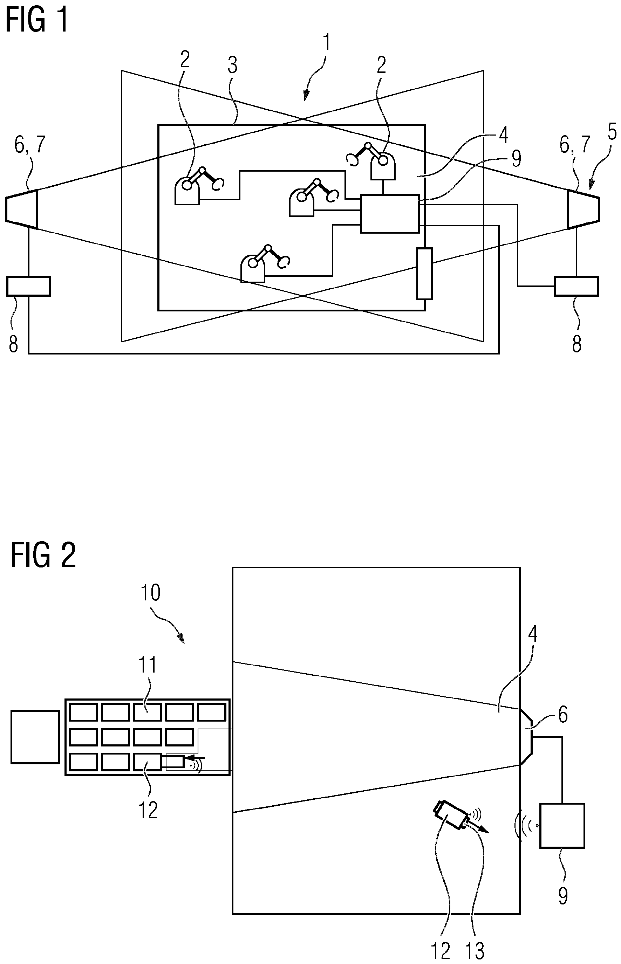

Die Figur 1 zeigt einen Fertigungsbereich 1, in welchem mehrere Industrieroboter 2, welche im Betrieb Fertigungsaufgaben und/oder Handhabungsaufgaben übernehmen, angeordnet sind. Der Fertigungsbereich 1 ist vorliegend mit einem Zaun 3 umgeben und bildet einen sicherheitsrelevanten Bereich 4.

In der Figur 1 ist ferner eine Anordnung 5 zur Überwachung des sicherheitsrelevanten Bereichs 4 dargestellt. Diese umfasst zwei einander gegenüberliegend angeordnete Sensoreinheiten, welche ausgebildet sind, den gesamten sicherheitsrelevanten Bereich 4 zu erfassen. Jede Sensoreinheit 6 umfasst dabei einen bildgebenden Sensor, konkret eine Kamera 7, zur Aufnahme von digitalen Bilddateien.

Ferner enthält jede Sensoreinheit 6 Auswertemittel 8, die ausgebildet sind, Daten der Kamera 7 in Echtzeit auszuwerten, um Personen im sicherheitsrelevanten Bereich 4 zu detektieren. Zur Auswertung greifen die Auswertemittel 8 dabei auf künstliche neuronale Netze zurück, die vorliegend trainiert sind.

Die Anordnung 5 umfasst außerdem eine Steuerungseinrichtung 9, welche mit den Auswertemitteln 8 der Sensoreinheiten 6 kommunikativ, vorliegend kabelgebunden, verbunden ist. Die Steuerungseinrichtung 9 ist ausgebildet, Anweisungen an die Industrieroboter 2, die sich im sicherheitsrelevanten Bereich 4 befinden, zu senden.

Begibt sich eine Person in den sicherheitsrelevanten Bereich 4, so wird diese von mindestens einer der beiden Kameras 7 detektiert und lokalisiert, was die Steuerungseinrichtung 9 veranlasst, die Industrieroboter 2 zu deaktivieren. Erst wenn die Person den sicherheitsrelevanten Bereich 4 wieder verlassen hat und somit nicht mehr im sicherheitsrelevanten Bereich 4 von Sensoreinheiten 6 detektiert wird, werden die Industrieroboter 2 wieder freigegeben. Auf diese Weise kann zum einen auf eine aufwendige Sicherheitsausstattung im sicherheitsrelevanten Bereich 4 verzichtet werden, zum anderen kann keine Fehlbedienung stattfinden, da die Industrieroboter 2 automatisiert von der Steuerungseinrichtung 9 freigegeben werden und nicht durch eine manuelle Freigabe.

Die Figur 2 zeigt einen Logistikbereich 10, konkret einen Bereich, in welchem ein Lastkraftwagen 11, welcher mehrere Paletten 12 geladen hat, mittels mehrerer selbstfahrenden Fahrzeuge, konkret Flurförderfahrzeuge 13, entladen wird.

In der Figur 2 ist ferner dargestellt eine Anordnung 5 zur Überwachung eines sicherheitsrelevanten Bereichs 4, welcher sich kegelförmig hinter dem LKW erstreckt. Die Anordnung 5 umfasst dabei eine Sensoreinheit 6, welche eine Kamera 7 aufweist, die an einer dem LKW 11 gegenüberliegenden Wand befestigt ist. Diese Sensoreinheit 6 erfasst den sicherheitsrelevanten Bereich 4 und ist, wie im Zusammenhang mit dem vorherigen Ausführungsbeispiel der Figur 1 beschrieben, ausgebildet, Personen zu detektieren. Dazu enthält die Sensoreinheit 6 geeignete Auswertemittel 8, welche auf künstliche neuronale Netze zurückgreifen.

Die Anordnung 5 enthält ferner eine Steuerungseinrichtung 9, welche mit der Sensoreinheit 6 kabelgebunden verbunden ist und die Daten der Kamera 7 in Echtzeit auswertet, um Personen im sicherheitsrelevanten Bereich zu detektieren.

Die Steuerungseinrichtung 9 ist ferner ausgebildet, Anweisungen an die Flurförderfahrzeuge 13 zu senden.

Die Flurförderfahrzeuge 13 besitzen eine Schutzeinrichtung 14, welche ausgebildet ist, Objekte, insbesondere Personen, innerhalb eines einstellbaren Schutzbereichs um das jeweilige Flurförderfahrzeug 13 zu erkennen. Diese Schutzeinrichtungen 14 umfassen vorliegend einen Laserscanner. Die Größe des Schutzbereichs kann dabei abhängig von der aktuellen Geschwindigkeit des jeweiligen Flurförderfahrzeugs eingestellt werden.

Wenn eine Person den sicherheitsrelevanten Bereich 4 betritt, kann die Steuerungseinrichtung 9 veranlassen, dass die Schutzeinrichtungen 14 der Flurförderfahrzeuge 13 aktiviert werden, so dass diese in der Lage sind, eine Person in ihrer Umgebung zu detektieren und Unfälle zu vermeiden. Solange sich keine Person im sicherheitsrelevanten Bereich 4 befindet, können die Schutzeinrichtungen 14 der Flurförderfahrzeuge 13 deaktiviert werden, da in diesem Fall kein Risiko eines Unfalls besteht.

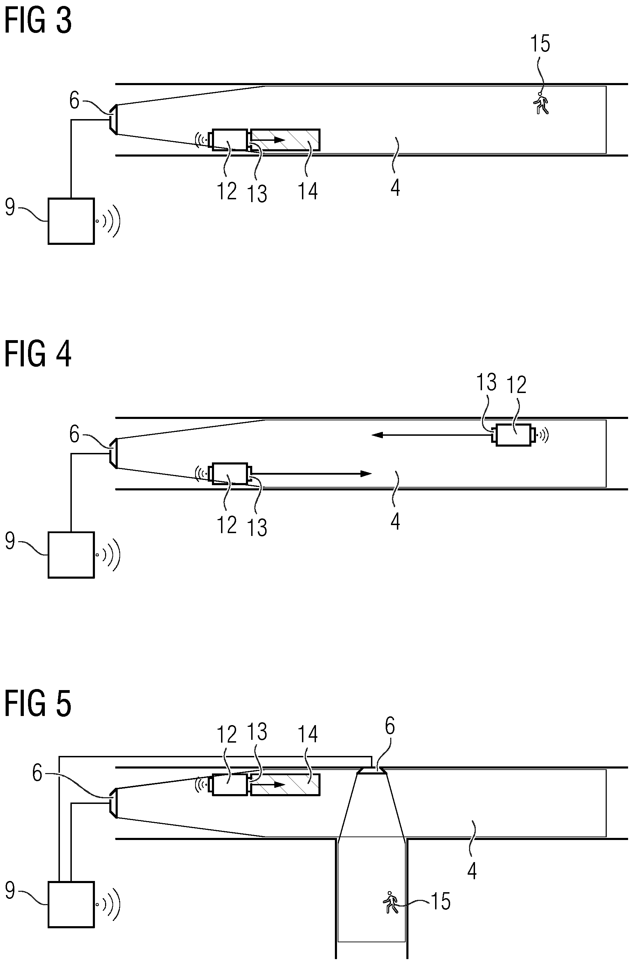

Die Figuren 3 und 4 zeigen diesen Mechanismus in einem längeren Gang oder Flur. In der Figur 3 ist eine Anordnung dargestellt, die wie in der Figur 2 eine Sensoreinheit 6 mit einer Kamera 7 und Auswertemitteln 8 umfasst, die mit einer Steuerungseinrichtung 9 verbunden ist, welche ausgebildet ist, mit den Flurförderfahrzeugen 13 kabellos zu kommunizieren. In der in der Figur 3 dargestellten Situation bewegt sich ein Flurförderfahrzeug 13 auf der rechten Seite eines Gangs. Dem Flurförderfahrzeug 13 entgegen kommt eine Person 15, welche durch ein Piktogramm angedeutet ist. Die Sensoreinheit 6 erkennt, dass sich eine Person 15 im sicherheitsrelevanten Bereich befindet und veranlasst durch eine entsprechende Anweisung das Flurförderfahrzeug 13, seine Schutzeinrichtung 14 zu aktivieren, was durch den schraffierten Bereich vor dem Flurförderfahrzeug 13 dargestellt ist. In diesem Fall detektiert das Flurförderfahrzeug 13 also selbst, ob es sich einem Objekt nähert. Wenn die Person 15 in den von der Schutzeinrichtung 14 erfassten Schutzbereich gelangt, hält das Flurförderfahrzeug 13 automatisch an.

In der Figur 4 ist eine Anordnung dargestellt, bei der lediglich ein anderes Flurförderfahrzeug 13 entgegenkommt. In diesem Fall ist eine Aktivierung der Schutzeinrichtungen 14 nicht erforderlich, da keine Gefahr eines Personenschadens besteht und die Flurförderfahrzeuge 13 mit relativ hoher Geschwindigkeit aneinander vorbeifahren können. Eine Kollision der Flurförderfahrzeuge 13 ist dabei durch die geltende Regel "Rechtsfahren" sichergestellt.

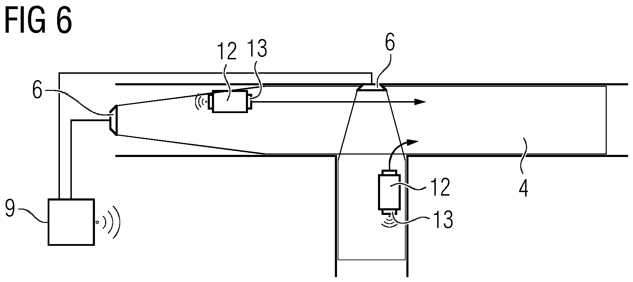

Die Figuren 5 und 6 zeigen schließlich eine unübersichtliche T-Kreuzung von zwei Gängen. Hier enthält die Anordnung 5 zwei Sensoreinheiten 6, um beide Gänge, die den sicherheitsrelevanten Bereich 4 bilden, zu erfassen. Beide Sensoreinheiten 6 sind mit der Steuerungseinrichtung 9 verbunden.

In der in der Figur 5 dargestellten Situation befindet sich eine Person 15 in dem Seitengang, welcher von einer Sensoreinheit 6 detektiert wird. Die Steuerungseinrichtungen 9 sendet daraufhin an das Flurförderfahrzeug 13 die Anweisung, seine Schutzeinrichtung 14 zu aktivieren.

Dem gegenüber sind bei der in der Figur 6 dargestellten Anordnung lediglich zwei Flurförderfahrzeuge 13 im sicherheitsrelevanten Bereich 4. Da keine Person 15 detektiert wird, können die Flurförderfahrzeuge 13 mit relativ hoher Geschwindigkeit und mit deaktivierten Schutzeinrichtungen 14 fahren.

In einer weiteren Ausgestaltung ist es denkbar, dass nicht nur überprüft wird, ob sich gerade Personen im sicherheitsrelevanten Bereich befinden, sondern auch erfasst wird, wie viele Personen den sicherheitsrelevanten Bereich betreten bzw. wieder verlassen. Auf diese Weise kann sichergestellt werden, das eine Person, die sich im sicherheitsrelevanten Bereich befindet, aber z.B. gerade von einem anderen Objekt verdeckt wird, nicht übersehen wird.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Anordnung (5) zur Überwachung eines sicherheitsrelevanten Bereichs (4), insbesondere eines Betriebsbereichs, bevorzugt eines Fertigungs- und Logistikbereichs (1), mit
mindestens einer Sensoreinheit (6), welche ausgebildet ist, zumindest einen Teil eines sicherheitsrelevanten Bereichs (4) zu erfassen und Personen zu detektieren, und mit
einer Steuerungseinrichtung (9), welche mit der mindestens einen Sensoreinheit (6) kommunikativ verbunden oder verbindbar ist und ausgebildet ist, Anweisungen an Vorrichtungen, die sich im sicherheitsrelevanten Bereich (4) oder in der Nähe des sicherheitsrelevanten Bereichs (4) befinden, zu senden.

2. Anordnung (5) nach Anspruch 1, **dadurch gekennzeichnet, dass** die mindestens eine Sensoreinheit ausgebildet ist, den gesamten sicherheitsrelevanten Bereich (4) zu überwachen, und/oder dass mindestens eine, insbesondere jede Sensoreinheit (6) einen bildgebenden Sensor, insbesondere eine Kamera (7) zur Aufnahme von digitalen Bilddateien oder ein Laser-Sensorsystem oder eine TOF-Kamera (7), umfasst, wobei, insbesondere, jede Sensoreinheit Auswertemittel (8) enthält, und/oder wobei, insbesondere, jeder Sensoreinheit (6) Auswertemittel (8) zugeordnet sind, wobei die Auswertemittel (8) ausgebildet sind, Daten des bildgebenden Sensors insbesondere in Echtzeit auszuwerten, um Personen im sicherheitsrelevanten Bereich (4) zu detektieren, wobei, bevorzugt, die Auswertemittel (8) zur Auswertung auf künstliche neuronale Netze zurückgreifen, wobei die künstlichen neuronalen Netze bevorzugt trainiert sind.

3. Anordnung (5) nach einem der vorherigen Ansprüche, **dadurch gekennzeichnet, dass** die mindestens eine Sensoreinheit (6) ausgebildet ist, Personen im sicherheitsrelevanten Bereich (4) zu lokalisieren, und/oder dass die Anordnung genau zwei einander gegenüberliegende Sensoreinheiten (6) aufweist, und/oder dass die mindestens eine Sensoreinheit (6) von einem Boden des sicherheitsrelevanten Bereichs (4) beabstandet angeordnet ist oder angeordnet werden kann, und/oder dass die mindestens eine Sensoreinheit (6) derart eingestellt ist, dass sie die Personen, die außerhalb eines sicherheitsrelevanten Bereichs (4) lokalisiert werden, ignoriert, und/oder dass die Anordnung eine Mensch-Maschine-Schnittstelle aufweist, mittels derer die sicherheitsrelevanten Bereiche (4) einprogrammiert bzw. eingegeben werden können, und/oder dass die mindestens eine Sensoreinheit (6) und die Steuerungseinrichtung (9) drahtlos oder kabelgebunden miteinander verbunden sind, und/oder dass die Steuerungseinrichtung (9) ausgebildet ist, kabellos Anweisungen an mindestens eine Vorrichtung zu senden.

4. System umfassend eine Anordnung (5) zur Überwachung eines sicherheitsrelevanten Bereichs (4) nach einem der vorherigen Ansprüche und mindestens eine Vorrichtung, welche ausgebildet ist, Anweisungen von der Steuerungseinrichtung (9) zu empfangen, wobei, insbesondere, mindestens eine Vorrichtung eine Fertigungseinrichtung und/oder ein Roboter ist.

5. System nach Anspruch 4, **dadurch gekennzeichnet, dass** mindestens eine Vorrichtung ein selbstfahrendes Fahrzeug, insbesondere ein autonomes Flurförderfahrzeug (AGV) (13) ist, wobei, insbesondere, mindestens ein selbstfahrendes Fahrzeug, insbesondere jedes selbstfahrende Fahrzeug, einen akustischen und/oder optischen Signalgeber aufweist, um eine Person (15) vor einem sich nähernden Fahrzeug zu warnen.

6. System nach Anspruch 5, **dadurch gekennzeichnet, dass** mindestens ein, insbesondere jedes selbstfahrende Fahrzeug eine Schutzeinrichtung (14) aufweist, welche ausgebildet ist, Objekte innerhalb eines insbesondere einstellbaren Schutzbereichs um das selbstfahrende Fahrzeug zu erkennen.

7. System nach Anspruch 6, **dadurch gekennzeichnet, dass** die Schutzeinrichtung (14) als Laserscanner ausgebildet ist und/oder einen solchen Laserscanner umfasst, und/oder dass das selbstfahrende Fahrzeug derart ausgestaltet ist, dass die Größe des Schutzbereichs abhängig von der Geschwindigkeit des selbstfahrenden Fahrzeugs eingestellt wird, und/oder dass die Steuerungseinrichtung (9) derart ausgestaltet ist, dass die Schutzeinrichtungen (14) des mindestens einen selbstfahrenden Fahrzeugs deaktiviert wird, wenn keine Person (15) im sicherheitsrelevanten Bereich (4) detektiert wird, und/oder dass die Schutzeinrichtung (14) des mindestens einen selbstfahrenden Fahrzeugs aktiviert wird, wenn eine Person (15) im sicherheitsrelevanten Bereich (4) detektiert wird.

8. System nach einem der Ansprüche 5 bis 7, **dadurch gekennzeichnet, dass** dieses ausgebildet ist, die selbstfahrenden Fahrzeuge zu lokalisieren, wobei, insbesondere,
das System ausgebildet ist, den Abstand zwischen den selbstfahrenden Fahrzeugen zu ermitteln.

9. Verfahren zur Überwachung eines sicherheitsrelevanten Bereichs (4), insbesondere eines Betriebsbereichs, bevorzugt eines Fertigungs- oder eines Logistikbereichs (1), wobei mindestens eine Sensoreinheit (6) zumindest einen Teil des sicherheitsrelevanten Bereichs (4) erfasst und Personen (15) in diesem Bereich detektiert, wobei die mindestens eine Sensoreinheit (6) mit einer Steuerungseinrichtung (9) kommuniziert und die Steuerungseinrichtung (9) in Abhängigkeit von detektierten Personen (15) Anweisungen an Vorrichtungen, die sich im sicherheitsrelevanten Bereich (4) oder in der Nähe des sicherheitsrelevanten Bereichs (4) befinden, sendet.

10. Verfahren nach Anspruch 9, **dadurch gekennzeichnet, dass** die Sensoreinheit (6) den gesamten sicherheitsrelevanten Bereich (4) überwacht, und/oder dass mindestens eine, insbesondere jede Sensoreinheit (6) einen bildgebenden Sensor, insbesondere eine Kamera (7) zur Aufnahme von digitalen Bilddateien oder ein Laser-Sensorsystem oder eine TOF-Kamera (7) umfasst, und die Sensoreinheit (6) Auswertemittel (8) umfasst oder dieser Auswertemittel (8) zugeordnet werden, welche insbesondere in Echtzeit von dem bildgebenden Sensor erstellte Daten auswerten, um Personen (15) im sicherheitsrelevanten Bereich (4) zu detektieren, wobei, insbesondere, die Auswertemittel (8) für die Auswertung auf künstliche neuronale Netze zurückgreifen, wobei die künstlichen neuronalen Netze bevorzugt trainiert sind.

11. Verfahren nach einem der Ansprüche 9 oder 10, **dadurch gekennzeichnet, dass** Personen (15) im sicherheitsrelevanten Bereich (4) lokalisiert werden, und/oder dass die Steuerungseinrichtung (9) Anweisungen an eine Fertigungsabteilung und/oder einen Roboter sendet.

12. Verfahren nach einem der Ansprüche 9 bis 11, **dadurch gekennzeichnet, dass** die Steuerungseinrichtung (9) Anweisungen an ein selbstfahrendes Fahrzeug, insbesondere ein autonomes Flurförderfahrzeug sendet.

13. Verfahren nach Anspruch 12, **dadurch gekennzeichnet, dass** das selbstfahrende Fahrzeug mittels einer Schutzeinrichtung (14) Objekte innerhalb eines insbesondere einstellbaren Schutzbereichs um das selbstfahrende Fahrzeug erkennt.

14. Verfahren nach Anspruch 13, **dadurch gekennzeichnet, dass** die Größe des Schutzbereichs abhängig von der Geschwindigkeit des selbstfahrenden Fahrzeugs eingestellt wird, und/oder dass die Schutzeinrichtung (14) des mindestens einen selbstfahrenden Fahrzeugs deaktiviert wird, wenn keine Person (15) im sicherheitsrelevanten Bereich (4) detektiert wird, und/oder dass die Schutzeinrichtung (14) des mindestens einen selbstfahrenden Fahrzeugs aktiviert wird, wenn eine Person (15) im sicherheitsrelevanten Bereich (4) detektiert wird, wobei, insbesondere, die Schutzeinrichtung (14) eines selbstfahrenden Fahrzeugs nur dann aktiviert wird, wenn sich Personen (15) unterhalb eines vorgegebenen Mindestabstands von dem jeweiligen selbstfahrenden Fahrzeug entfernt befinden.

15. Verfahren nach einem der Ansprüche 12 bis 14, **dadurch gekennzeichnet, dass** die mindestens eine Sensoreinheit (6) die selbstfahrenden Fahrzeuge lokalisiert, und/oder dass der Abstand der selbstfahrenden Fahrzeuge untereinander bestimmt wird, wobei, insbesondere, in Abhängigkeit von den ermittelten Abständen Anweisungen an die selbstfahrenden Fahrzeuge übermittelt werden, und/oder dass die selbstfahrenden Fahrzeuge mit einem optischen und/oder akustischen Warnsignal Personen (15), denen sich das jeweilige selbstfahrende Fahrzeug annähert, warnen.
